# EUROPÄISCHE PATENTSCHRIFT

(11) **EP 4 153 468 B1**
(45) Veröffentlichungstag und Bekanntmachung des Hinweises auf die Patenterteilung: **24.07.2024**
(21) Anmeldenummer: 21716651.1
(22) Anmeldetag: 29.03.2021
(51) Int. Cl.: B62D 27/02, B62D 21/11, B62D 25/08, B62D 21/15

(54) **PERSONENKRAFTWAGEN MIT EINER BEFESTIGUNGSANORDNUNG EINES INTEGRALTRÄGERS**
PASSENGER CAR WITH A FASTENING ARRANGEMENT OF AN INTEGRAL SUBFRAME
VOITURE AVEC UN AGENCEMENT DE FIXATION D'UN SOUS-CHÂSSIS INTÉGRAL

(30) Priorität: 19.05.2020 DE 102020003013
(43) Veröffentlichungstag der Anmeldung: 29.03.2023
(73) Patentinhaber: Mercedes-Benz Group AG, 70372 Stuttgart (DE)
(72) Erfinder: GANZHORN, Regina, 71063 Sindelfingen (DE); DITTMER, Niels, Ole, 71083 Herrenberg (DE); MURMANN, Robert, 70839 Gerlingen (DE)
(74) Vertreter: Novagraaf Group
(86) Internationale Anmeldenummer: PCT/EP2021/058126
(87) Internationale Veröffentlichungsnummer: WO 2021/233600

(56) Entgegenhaltungen:
- EP-A1- 3 590 792
- DE-A1- 102016 109 912
- JP-A- H08 282 534
- US-A1- 2020 017 146

## Beschreibung

Die Erfindung betrifft einen Personenkraftwagen gemäß Oberbegriff des Anspruchs 1.

Ein Personenkraftwagen der hier angesprochenen Art geht aus der DE 10 2018 205 171 A1 hervor. Dieser umfasst einen auch als Hilfsrahmen, Vorderachsträger, Fahrschemel, Achsschemel oder Motorträger bezeichneten Integralträger, welcher an in Fahrzeugquerrichtung voneinander beabstandeten und in Fahrzeughochrichtung über dem Integralträger angeordneten Längsträgern einer Karosserie des Personenkraftwagens befestigt ist. Außerdem ist in Fahrzeuglängsrichtung hinter dem Integralträger ein elektrischer Energiespeicher angeordnet, welcher auch in Fahrzeughochrichtung unterhalb eines Bodens der Karosserie angeordnet ist. Dabei ist auch der elektrische Energiespeicher an der Karosserie befestigt beziehungsweise gehalten.

Aus der gattungsbildenden EP 3 590 792 A1 geht ein Personenkraftwagen mit einer Längsträger aufweisenden Karosserie hervor, wobei an den Längsträgern ein Integralträger befestigt ist. Des Weiteren ist ein in Fahrzeuglängsrichtung hinter dem Integralträger angeordneter elektrischer Energiespeicher vorgesehen, welcher unterhalb eines Bodens der Karosserie angeordnet und ebenfalls an der Karosserie befestigt ist

Weiterhin geht aus der DE 10 2012 220 871 A1 ein Vorderachsträger für ein Kraftfahrzeug hervor, der zwei Längsträger aufweist, an denen Aufhängungspunkte für eine Vorderradaufhängung ausgebildet sind.

Aufgabe der vorliegenden Erfindung ist es, einen Personenkraftwagen der hier angesprochen Art zu schaffen, bei welchem das Unfallverhalten im Falle eines Frontalaufpralls verbessert werden kann.

Diese Aufgabe wird erfindungsgemäß durch einen Personenkraftwagen mit den Merkmalen des Anspruchs 1 gelöst. Vorteilhafte Ausgestaltungen mit zweckmäßigen Weiterbildungen der Erfindung sind Gegenstand der abhängigen Ansprüche.

Bei dem erfindungsgemäßen Personenkraftwagen ist ein Integralträger an einer selbsttragenden Karosserie des Personenkraftwagens befestigt. Die Karosserie weist dabei zwei in Fahrzeugquerrichtung voneinander beabstandete und auch als Hauptlängsträger (HLT) bezeichnete Längsträger auf, welche in Fahrzeughochrichtung über dem Integralträger angeordnet sind. Dabei ist der auch als Hilfsrahmen, Vorderachsträger, Fahrschemel, Achsschemel oder Motorträger bezeichnete Integralträger an den Längsträgern befestigt. Des Weiteren ist in Fahrzeuglängsrichtung hinter dem Integralträger ein elektrischer Energiespeicher angeordnet, in beziehungsweise mittels welchem elektrische Energie beziehungsweise elektrischer Strom gespeichert werden kann. Der Energiespeicher ist in Fahrzeughochrichtung unterhalb eines Bodens der Karosserie angeordnet, deren Boden einen auch als Innenraum oder Fahrgastzelle bezeichneten Fahrgastraum des Personenkraftwagens in Fahrzeughochrichtung nach unten hin zumindest teilweise, insbesondere zumindest überwiegend oder vollständig, begrenzt. Dabei ist der Energiespeicher in Fahrzeughochrichtung nach oben hin zumindest teilweise, insbesondere zumindest überwiegend oder vollständig, durch den Boden überdeckt. Bei der Befestigungsanordnung ist auch der Energiespeicher an dem Boden befestigt.

Um nun ein besonders vorteilhaftes Unfallverhalten des Personenkraftwagens realisieren zu können, ist es erfindungsgemäß vorgesehen, dass der Integralträger an seinem dem Energiespeicher zugewandten Ende wenigstens eine Stufe aufweist, durch welche wenigstens eine obere Abstützfläche A1 und eine untere Abstützfläche A2 gebildet sind, wobei die obere Abstützfläche A1 in Fahrzeuglängsrichtung in Gegenüberlage zu einem unter dem Boden angeordneten Querträger der Karosserie und die untere Abstützfläche A2 in Fahrzeuglängsrichtung in Gegenüberlage zu einem unter dem Boden angeordneten Trägerelement des Energiespeichers angeordnet sind.

Festzuhalten bleibt, dass der unter dem Boden angeordnete und somit insbesondere in Fahrzeughochrichtung nach oben durch den Boden überdeckte Querträger der Karosserie in Fahrzeuglängsrichtung nach vorne hin zumindest teilweise, insbesondere zumindest überwiegend oder vollständig, von der Abstützfläche A1 des Integralträger überdeckt ist. Da der Querträger ein Bestandteil der Karosserie ist, wird der Querträger auch als Karosseriequerträger bezeichnet. Außerdem sind die Abstützflächen in Fahrzeuglängsrichtung zueinander versetzt angeordnet, derart, dass bei einem bevorzugten Ausführungsbeispiel vorgesehen ist, dass die zweite, untere Abstützfläche in Fahrzeuglängsrichtung nach hinten hin gegenüber der ersten, oberen Abstützfläche angeordnet ist. Das in Fahrzeughochrichtung unter dem Boden angeordnete und somit beispielsweise in Fahrzeughochrichtung nach oben hin durch den Boden überdeckte Trägerelement des Energiespeichers ist in Fahrzeuglängsrichtung nach vorne hin zumindest teilweise, insbesondere zumindest überwiegend oder vollständig, durch die untere Abstützfläche überdeckt.

Bei einem bevorzugten Ausführungsbeispiel weist der Integralträger eine bogenförmige Struktur auf, welche somit zumindest in einem Teilbereich bogenförmig, insbesondere kreissegmentförmig, ausgebildet ist. Insbesondere ist die bogenförmige Struktur zumindest in dem genannten Teilbereich nach Art des griechischen Großbuchstabens Omega (Ω) und somit omegaförmig ausgebildet, wobei beispielsweise die bogenförmige Struktur an sich zwei Schenkel mit jeweiligen, insbesondere an sich freien Enden aufweist. Der Integralträger weist außerdem zwei vordere, das heißt in Fahrzeuglängsrichtung vor der bogenförmigen Struktur angeordnete Stützträger auf, die sich in Fahrzeuglängsrichtung nach vorne hin von der bogenförmigen Struktur an sich weg erstrecken. Außerdem verlaufen die Stützträger schräg zueinander, so dass sich die Stützträger in Fahrzeuglängsrichtung nach vorne hin voneinander weg erstrecken. Dies bedeutet, dass die Stützträger zumindest im Wesentlichen V-förmig erstrecken, derart, dass sich die Stützträger in Fahrzeuglängsrichtung von vorne nach hinten und somit in Richtung der bogenförmigen Struktur aufeinander zu erstrecken. Der Integralträger umfasst ferner einen vorderen, das heißt in Fahrzeuglängsrichtung vor der bogenförmigen Struktur angeordneten Integralträger-Querträger, welcher in Fahrzeuglängsrichtung von der bogenförmigen Struktur, insbesondere von deren Scheitel, beabstandet ist. Dies bedeutet, dass der Integralträger-Querträger die bogenförmige Struktur nicht berührt. Über den Integralträger-Querträger sind die Stützträger miteinander verbunden, insbesondere derart, dass der Integralträger-Querträger an sich über seine freien Enden an die Stützträger angebunden ist.

Bei dem auch als Energiespeicher-Trägerelement bezeichneten Trägerelement handelt es sich beispielsweise um einen Halterahmen, insbesondere um einen Batteriemodulhalterahmen oder um ein Gehäuse, welches eine Batterie beziehungsweise Zellmodule oder Speicherzellen zum Speichern der elektrischen Energie aufnimmt. Mit anderen Worten kann vorgesehen sein, dass das Trägerelement ein Gehäuse ist, in welchem mehrere Speicherzellen des Energiespeichers angeordnet sind, wobei mittels der Speicherzellen beziehungsweise in den Speicherzellen elektrische Energie zu speichern oder gespeichert ist. Mittels der Abstützflächen und dadurch, dass der Integralträger an die darüber angeordneten Hauptlängsträger angebunden ist, können sich bei einem Frontalcrash, das heißt bei einem Frontalaufprall des Personenkraftwagens, mehrere Lastpfade pro Stützträger des Integralträgers ausbilden, dessen jeweiliger Stützträger auch als Längsträgerelement bezeichnet wird. Bei einem solchen Frontalcrash auftretende und insbesondere in Fahrzeuglängsrichtung von vorne nach hinten wirkende Crash- beziehungsweise Unfallkräfte werden über einen ersten der Lastpfade in die Karosserie beziehungsweise in deren Karosseriestruktur eingeleitet, wobei sich der erste Lastpfad zumindest über einen jeweiligen Teil des jeweiligen Stützträgers und über wenigstens einen an dem jeweiligen Hauptlängsträger vorgesehenen Anbindungspunkt erstreckt, an beziehungsweise in welchem der Integralträger an dem jeweiligen Hauptlängsträger angebunden ist. Dies bedeutet, dass zumindest ein Teil der Unfallkräfte von dem Integralträger in den jeweiligen Hauptlängsträger und somit in die Karosserie eingeleitet werden. Über einen zweiten der Lastpfade wird zumindest ein Teil der Unfallkräfte über den Integralträger und dabei über dessen erste, vordere und obere Abstützfläche in den Querträger unter dem Boden und somit in die Karosseriestruktur eingeleitet. Der dritte Lastpfad umfasst die zweite, vorzugsweise untere und insbesondere hintere Abstützfläche, so dass über den dritten Lastpfad zumindest ein Teil der Unfallkräfte über diese untere Abstützfläche in das Energie-Trägerelement und von dort ebenfalls in die Karosserie eingeleitet wird, insbesondere aufgrund dessen, dass der Energiespeicher, insbesondere das Energiespeicher-Trägerelement, an der Karosserie befestigt, das heißt an die Karosserie angebunden ist. Daher sind erfindungsgemäß zumindest nahezu alle Anbindungspunkte, an oder in denen der Integralträger an die Karosserie angebunden ist, zumindest im Wesentlichen entlastet. Besonders vorteilhaft ist, dass die Unfallkräfte auf den unterschiedlichen Lastpfaden in die Karosseriestruktur eingeleitet werden, so dass auf das Trägerelement wirkende Belastungen und somit die Gefahr von Beschädigungen des Energiespeichers gering gehalten werden können.

In vorteilhafter Ausgestaltung der Erfindung ist der Integralträger im Bereich der Abstützflächen, insbesondere in Fahrzeuglängsrichtung zwischen den Abstützflächen, in Fahrzeughochrichtung nach oben an dem Karosserie-Querträger befestigt, insbesondere an den Karosserie-Querträger angeschraubt. Dadurch kann eine besonders vorteilhafte Einleitung der Unfallkräfte von dem Integralträger in die Karosseriestruktur realisiert werden, so dass übermäßige Belastungen des Energiespeichers vermieden werden können.

Um eine besonders vorteilhafte und insbesondere direkte Ableitung der Unfallkräfte von dem Integralträger in die Karosserie realisieren zu können, ist es bei einer Ausführungsform der Erfindung vorgesehen, dass die vordere, obere Abstützfläche in Fahrzeuglängsrichtung nach hinten direkt an dem Querträger anliegt. Alternativ kann vorgesehen sein, dass die obere Abstützfläche in einem Abstand vom Querträger angeordnet ist, wodurch Lage- und Bauteiltoleranzen ausgeglichen werden können und das erst im Crashfall bei einer entsprechenden Verformung des Fahrzeugvorbaus es zur Anlage der Abstützfläche am Querträger und somit zur Lasteinleitung in die Karosserie über diese Anbindungsstelle kommt.

Als weiterhin besonders vorteilhaft hat es sich gezeigt, wenn die untere Abstützfläche - zusätzlich oder alternativ zur oberen Abstützfläche -in Fahrzeuglängsrichtung von einem Trägerelement beabstandet ist. Dadurch können übermäßige Belastungen des Energiespeichers vermieden und somit die Gefahr von Beschädigungen des Energiespeichers besonders gering gehalten werden. Vorzugsweise ist es vorgesehen, dass in Fahrzeuglängsrichtung zwischen der hinteren, unteren Abstützfläche und dem Trägerelement des Energiespeichers kein weiteres, zusätzlich zu dem Integralträger und zusätzlich zu dem Energiespeicher vorgesehenes Bauelement angeordnet ist. Insbesondere kann vorgesehen sein, dass in Fahrzeuglängsrichtung zwischen der unteren Abstützfläche und dem Trägerelement ein Luftspalt angeordnet ist.

Eine weitere Ausführungsform zeichnet sich dadurch aus, dass der Karosserie-Querträger endseitig an jeweilige, in Fahrzeugquerrichtung voneinander beabstandete Seitenschweller der Karosserie angebunden ist. Hierdurch kann eine besonders vorteilhafte Steifigkeit dargestellt werden, so dass die Unfallkräfte besonders vorteilhaft abgeleitet beziehungsweise abgestützt werden können.

Um beispielsweise die Gefahr von Beschädigungen des Energiespeichers besonders gering halten zu können, ist es denkbar, dass der Energiespeicher, insbesondere dessen Speicherzellen, in Fahrzeugquerrichtung zwischen den Seitenschwellern angeordnet ist. Hierunter kann insbesondere verstanden werden, dass der Energiespeicher, insbesondere dessen Speicherzellen, in Fahrzeugquerrichtung nach außen hin beidseitig zumindest teilweise, insbesondere zumindest überwiegend oder vollständig, durch die Seitenschweller überdeckt ist.

Um den Energiespeicher besonders gut vor übermäßigen Belastungen schützen zu können, ist es in weiterer Ausgestaltung der Erfindung vorgesehen, dass das Trägerelement, insbesondere direkt, an dem Querträger befestigt ist.

Bei einer besonders vorteilhaften Ausführungsform der Erfindung weist der Integralträger einen weiteren, hinteren Integralträger-Querträger auf, welcher somit in Fahrzeuglängsrichtung hinter dem vorderen Integralträger-Querträger angeordnet ist. Über den hinteren Integralträger-Querträger sind die jeweiligen Schenkel der bogenförmigen Struktur, insbesondere die zuvor genannten, an sich freien Enden der Schenkel, miteinander verbunden. Dadurch kann eine besonders hohe Steifigkeit realisiert werden.

Der auch als Hilfsrahmen bezeichnete Integralträger ist vorzugsweise ein Vorderachsträger, an welchem beispielsweise Radlenker zum Führen von Fahrzeugrädern gelenkig befestigbar oder befestigt sind. Um den Integralträger an die Hauptlängsträger anzubinden und um die Stufen und somit die Abstützflächen zu realisieren, weist der Integralträger beispielsweise Strukturen auf, mittels welchen die zuvor beschriebenen Lastpfade realisiert werden können. Diese Strukturen und somit die Lastpfade ermöglichen es, sowohl bei einem auch als Frontcrash bezeichneten Frontalaufprall als auch bei einem Frontalaufprall mit geringer Seitenüberdeckung und bei einem sogenannten, auch als Pfahlcrash bezeichneten Pfahlaufprall jeweilige Unfallkräfte besonders vorteilhaft in die Karosseriestruktur ableiten zu können, wodurch ein besonders vorteilhaftes Unfallverhalten realisiert werden kann. Der Integralträger kann grundsätzlich genutzt werden, um einen beispielsweise als Verbrennungsmotor oder aber als elektrische Maschine ausgebildeten Antriebsmotor zum Antreiben des Personenkraftwagens zu tragen. Der Integralträger ist jedoch auch dann besonders vorteilhaft, wenn kein Antriebsmotor an dem Integralträger abgestützt ist und somit beispielsweise in einem Vorbau des Personenkraftwagens kein Antriebsmotor vorhanden ist. Dabei kann der beispielsweise als Vorderachsträger ausgebildete Integralträger auch dann Unfallenergie vorteilhaft leiten und beispielsweise auch absorbieren, wenn der Vorbau frei von einem Antriebsmotor ist.

Weitere Vorteile und Einzelheiten der Erfindung ergeben sich aus der nachfolgenden Beschreibung sowie anhand der Zeichnung. Dabei zeigen:
- Fig. 1: ausschnittsweise eine schematische und teilweise geschnittene Seitenansicht eines Integralträgers an einer Karosserie für einen Personenkraftwagen;
- Fig. 2: eine schematische Perspektivansicht des Integralträgers;
- Fig. 3: eine weitere schematische Perspektivansicht des Integralträgers;
- Fig. 4: eine schematische Draufsicht des Integralträgers;
- Fig. 5: eine schematische Unteransicht des Integralträgers;
- Fig. 6: ausschnittsweise eine weitere schematische und geschnittene Seitenansicht der Befestigungsanordnung;
- Fig. 7: ausschnittsweise eine schematische Perspektivansicht der Befestigungsanordnung;
- Fig. 8: ausschnittsweise eine schematische Seitenansicht der Befestigungsanordnung; und
- Fig. 9: ausschnittsweise eine weitere schematische und teilweise geschnittene Seitenansicht der Befestigungsanordnung.

In den Figuren sind gleiche oder funktionsgleiche Elemente mit gleichen Bezugszeichen versehen.

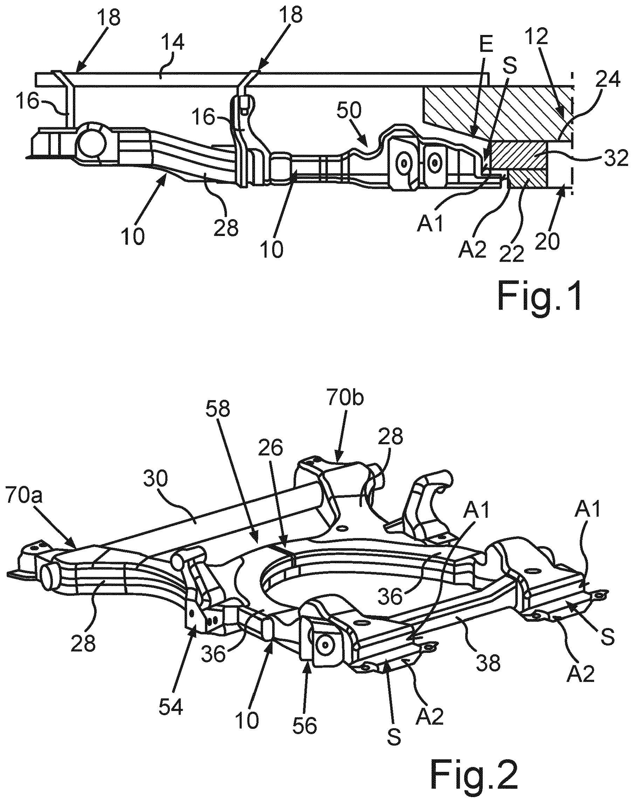

Fig. 1 zeigt ausschnittsweise in einer schematischen und teilweise geschnittenen Seitenansicht eine Befestigungsanordnung eines Integralträgers 10 an einer selbsttragenden Karosserie 12 eines Personenkraftwagens. Bei dem in den Figuren gezeigten Ausführungsbeispiel ist der Integralträger 10 ein auch als Hilfsrahmen bezeichneter Achsträger, insbesondere Vorderachsträger, an welchem eine in den Figuren nicht dargestellte Achse, insbesondere Vorderachse, des Personenkraftwagen anbindbar oder angebunden ist. Hierzu sind beispielsweise jeweilige Radlenker zum Führen von Fahrzeugrädern des Personenkraftwagens gelenkig an dem Integralträger 10 befestigt oder befestigbar.

Bei der Befestigungsanordnung ist der separat von der selbsttragenden Karosserie 12 ausgebildete Integralträger 10 in Fahrzeughochrichtung (z-Richtung im Fahrzeugkoordinatensystem) unterhalb von in Fahrzeugquerrichtung (y-Richtung im Fahrzeugkoordinatensystem) voneinander beabstandeten Längsträgern der Karosserie 12 angeordnet. Von den in Fahrzeughochrichtung über dem Integralträger 10 angeordneten Längsträgern der Karosserie 12 ist in Fig. 1 der in Fahrzeugquerrichtung bezogen auf die Vorwärtsrichtung des Personenkraftwagens linke, in Fig. 1 mit 14 bezeichnete Längsträger erkennbar.

Dabei weist beispielsweise der Integralträger 10, insbesondere je Längsträger 14, wenigstens zwei genau zwei Befestigungselemente 16 auf, welche in Fahrzeuglängsrichtung aufeinanderfolgend und voneinander beabstandet angeordnet sind. Über die Befestigungselemente 16 ist der Integralträger 10 an jeweiligen, in Fahrzeuglängsrichtung (x-Richtung im Fahrzeugkoordinatensystem) voneinander beabstandeten und auch als Anbindungspunkte bezeichneten Befestigungspunkten 18 des Längsträgers 14 befestigt. Somit sind an dem Längsträger 14 mehrere Anbindungspunkte in Form der Befestigungspunkte 18 vorgesehen, an beziehungsweise mittels deren der Integralträger 10 am jeweiligen Längsträger 14 befestigt ist.

In Fahrzeuglängsrichtung hinter dem Integralträger 10 in einem fahrgastzellennahen Bereich ist ein elektrischer Energiespeicher 20 des Personenkraftwagens angeordnet, insbesondere derart, dass der Energiespeicher 20 in Fahrzeuglängsrichtung nach vorne hin durch den Integralträger 10 zumindest teilweise überdeckt beziehungsweise überlappt ist. In dem elektrischen Energiespeicher 20 kann elektrische Energie beziehungsweise elektrischer Strom gespeichert werden. Dabei ist der Energiespeicher 20 vorzugsweise ein Traktionsspeicher. Darunter ist insbesondere zu verstehen, dass der Personenkraftwagen wenigstens eine elektrische Maschine aufweist, mittels welcher der Personenkraftwagen elektrisch angetrieben werden kann. Somit wird die elektrische Maschine auch als Traktionsmaschine bezeichnet. Um den Personenkraftwagen mittels der elektrischen Maschine elektrisch anzutreiben, wird die elektrische Maschine in einem Motorbetrieb und somit als Elektromotor betrieben. Hierzu wird die elektrische Maschine mit in dem Energiespeicher 20 gespeicherter, elektrischer Energie versorgt.

Der Energiespeicher 20 weist ein Trägerelement 22 auf, welches bei dem in den Figuren gezeigten Ausführungsbeispiel als Gehäuse ausgebildet ist. Insbesondere dann, wenn der Energiespeicher 20 als Batterie, insbesondere als Hochvolt-Batterie (HV-Batterie), ausgebildet ist, wird das Gehäuse 22 auch als Batteriegehäuse bezeichnet. In dem Gehäuse 22 sind vorzugsweise mehrere Speicherzellen des Energiespeichers 20 angeordnet, in dessen Speicherzellen die elektrische Energie gespeichert werden kann. Die Speicherzellen sind dabei beispielsweise elektrisch miteinander verbunden. Wie im Folgenden noch genauer erläutert wird, ist der Energiespeicher 20 an der auch als Rohbau oder Karosserietragstruktur bezeichneten Karosserie 12 befestigt. Da der Integralträger 10, insbesondere über die Befestigungselemente 16, an die auch als Hauptlängsträger bezeichneten Längsträger der Karosserie 12 angebunden ist, ist auch der Integralträger 10 an der Karosserie 12 befestigt. Die Karosserie 12 weist weiterhin einen auch als Hauptboden bezeichneten Boden 24 auf, durch welchen die auch als Fahrgastraum oder Innenraum bezeichnete Fahrgastzelle des Personenkraftwagens in Fahrzeughochrichtung nach unten hin zumindest teilweise begrenzt beziehungsweise gegenüber der Fahrbahn abgeschottet ist. Dabei sind der Energiespeicher 20 und somit das Trägerelement 22 in Fahrzeughochrichtung unterhalb des Bodens 24 angeordnet, insbesondere derart, dass der Energiespeicher 20 und insbesondere das Trägerelement 22 in Fahrzeughochrichtung nach oben hin zumindest teilweise durch den Boden 24 überdeckt sind.

Um nun ein besonders vorteilhaftes Unfallverhalten des Personenkraftwagens insbesondere im Falle eines Frontalaufpralls mit vollständiger oder aber auch nur teilweise Überdeckung realisieren zu können, weist der Integralträger 10 - wie besonders gut in Zusammenschau der Fig. 2 bis 5 erkennbar ist - eine bogenförmige Struktur 26 auf, welche bei dem in den Figuren gezeigten Ausführungsbeispiel zumindest im Wesentlichen Q(Omega-)-förmig ausgebildet ist, das heißt die Form des griechischen Großbuchstabens Omega aufweist. Außerdem umfasst der Integralträger 10 zwei vordere, sich in Fahrzeuglängsrichtung nach vorne von der bogenförmigen Struktur 26 und voneinander weg erstreckende Stützträger 28 auf, welche über die Befestigungselemente 16 an die oberen Längsträger 14 angebunden sind. Die Stützträger 28, welche auch als Längsträgerelemente des Integralträgers 10 bezeichnet werden, erstrecken sich dabei so weit in Fahrzeugquerrichtung nach außen und voneinander weg, dass die Stützträger 28 in Fahrzeugquerrichtung weiter außen enden als die bogenförmige Struktur 26. Außerdem umfasst der Integralträger 10 einen vorderen, in Fahrzeuglängsrichtung vollständig von der bogenförmigen Struktur 26 beabstandeten Integralträger-Querträger 30, welcher an seinen jeweiligen Enden an die Stützträger 28, insbesondere an deren Enden, angebunden ist. Dadurch sind die Stützträger 28 über den Integralträger-Querträger 30 miteinander verbunden.

Des Weiteren weist der Integralträger 10 an seinem dem Energiespeicher 20 in Fahrzeuglängsrichtung zugewandten und dabei in Fahrzeuglängsrichtung nach hinten weisenden Ende E jeweilige, in Fahrzeugquerrichtung voneinander beabstandete Stufen S auf. Durch die jeweilige Stufe S ist eine jeweilige, vordere und obere Abstützfläche A1 gebildet, durch welche ein jeweiliger Teilbereich eines in Fahrzeughochrichtung unter dem Boden 24 angeordneten Querträgers 32 der Karosserie 12 in Fahrzeuglängsrichtung nach vorne hin überdeckt ist. Des Weiteren ist durch die Stufe S eine sowohl in Fahrzeughochrichtung als auch in Fahrzeuglängsrichtung versetzt zu der ersten Abstützrichtung A1 angeordnete, untere und hintere Abstützfläche A2 gebildet. Die Abstützfläche A2 ist in Fahrzeuglängsrichtung weiter hinten als die Abstützfläche A1 angeordnet. Außerdem ist die Abstützfläche A2 in Fahrzeughochrichtung weiter unten, als fahrbahnnäher als die Abstützfläche A1 angeordnet. Durch die hintere, untere Abstützfläche A2 ist ein jeweiliger Teilbereich des Trägerelements 22 in Fahrzeuglängsrichtung nach vorne hin überdeckt. Der Integralträger 10 ist somit über die Abstützflächen A1 in Fahrzeuglängsrichtung nach hinten an dem Querträger 32 und über die Abstützfläche A2 in Fahrzeuglängsrichtung nach hinten an dem Trägerelement 22, insbesondere jeweils direkt, abgestützt oder abstützbar, wodurch in Fahrzeuglängsrichtung von vorne nach hinten wirkende Unfallkräfte besonders vorteilhaft in die Karosserie 12 eingeleitet werden können. Außerdem können die Unfallkräfte über die Befestigungselemente 16 und somit über die Befestigungspunkte 18 in die Hauptlängsträger und somit in die Karosserie 12 eingeleitet werden.

Insgesamt ist erkennbar, dass sich, insbesondere je Längsträgerelement (Stützträger 28), drei Lastpfade ausbilden können, wenn es zu einem Frontalaufprall des Personenkraftwagens kommt. Ein erster der Lastpfade verläuft über einen jeweiligen Teil des jeweiligen Stützträgers 28, über die jeweiligen Befestigungselemente 16 und die Befestigungspunkte 18 in den jeweiligen Längsträger 14 und somit in die Karosserie 12. Ein zweiter der Lastpfade verläuft beispielsweise über den jeweiligen Stützträger 28, die bogenförmige Struktur 26 und die jeweilige, vordere und obere Abstützfläche A1 in den Querträger 32 und somit ebenfalls in die auch als Karosseriestruktur bezeichnete Karosserie 12. Der dritte Lastpfad verläuft über den jeweiligen Stützträger 28, die bogenförmige Struktur 26 und die jeweilige, hintere und untere Abstützfläche A2 in das an der Karosserie 12 ausgebildete beziehungsweise in die Karosserie 12 integrierte oder daran befestigte Trägerelement 22 und über dieses ebenfalls in die Karosserie 12.

Insbesondere kann der Integralträger 10 über die der Fahrgastzelle zugewandten Abstützflächen A1 und A2 besonders gut Unfallkräfte in die Karosserie 12 einleiten. Auch kann der Integralträger 10 Unfallkräfte besonders vorteilhaft in die Hauptlängsträger einleiten.

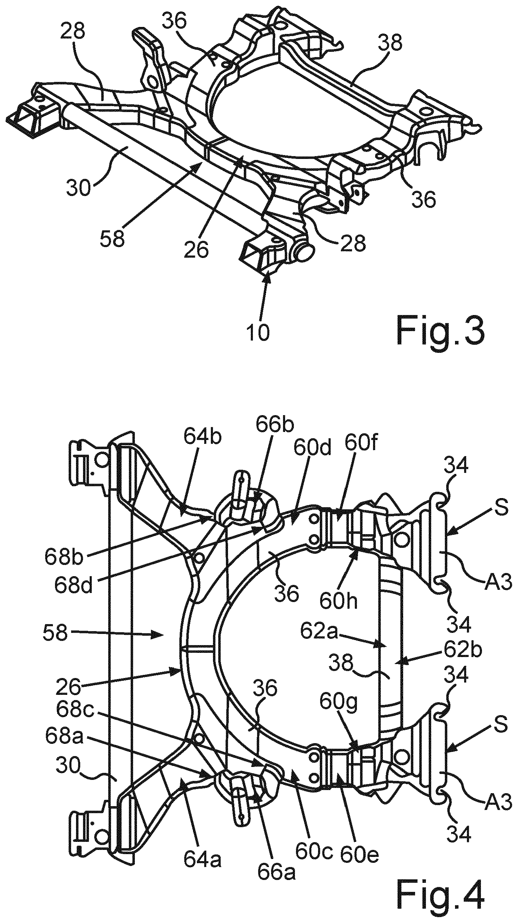

Des Weiteren ist es vorzugsweise vorgesehen, dass der Integralträger 10 im Bereich der Abstützflächen A1 und A2, insbesondere in Fahrzeuglängsrichtung zwischen den Abstützflächen A1 und A2, in Fahrzeughochrichtung nach oben an dem Querträger 32 befestigt ist. Hierzu weist der Integralträger 10 insbesondere je Stufe S wenigstens ein oder mehrere, besonders gut aus Fig. 4 erkennbare Befestigungselemente 34 auf, welche vorliegend vorzugsweise als Schrauböffnungen, insbesondere als Durchgangsöffnungen, ausgebildet sind. Mittels der Befestigungselemente 34 ist der Integralträger 10 an seinem auch als Endbereich bezeichneten Ende E in Fahrzeughochrichtung von unten nach oben gegen den Querträger 32 geschraubt beziehungsweise an den Querträger 32 angeschraubt. Die Abstützflächen A1 und A2 verlaufen beispielsweise zumindest im Wesentlichen vertikal, das heißt parallel zur Fahrzeughochrichtung und somit beispielsweise senkrecht zur Fahrzeuglängsrichtung. In Fahrzeuglängsrichtung zwischen den Abstützflächen A1 und A2 ist beispielsweise eine jeweilige dritte Abstützfläche A3 der jeweiligen Stufe S angeordnet. Über die jeweilige Abstützfläche A3 ist der Integralträger 10 in Fahrzeughochrichtung nach oben hin, insbesondere direkt, an dem Querträger 32 abstützbar oder abgestützt, so dass beispielsweise die jeweilige Abstützfläche A3 in Fahrzeughochrichtung nach oben hin zumindest teilweise durch den Querträger 32 überdeckt ist. Die jeweilige Abstützfläche A3 erstreckt sich dabei vorzugsweise senkrecht zur Fahrzeughochrichtung und somit beispielsweise horizontal.

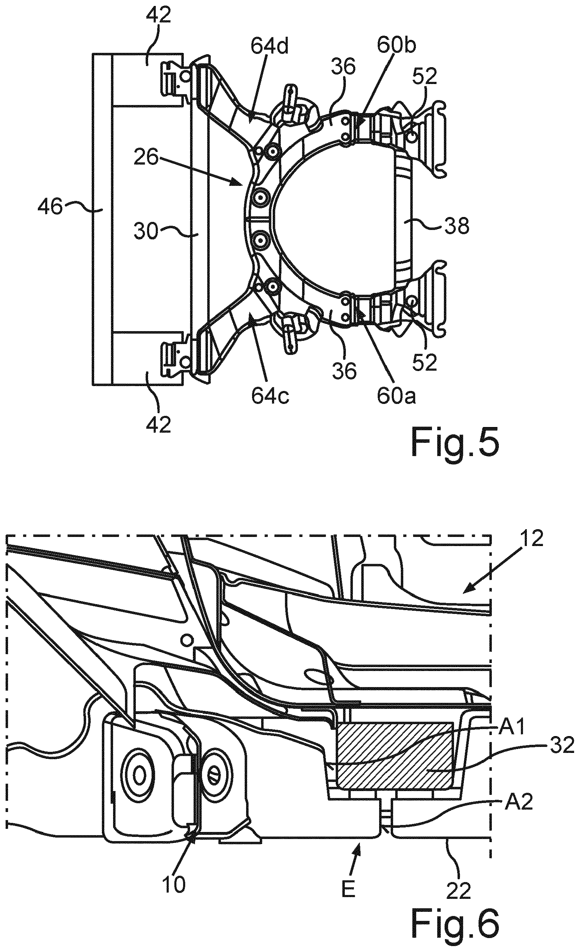

Wie insbesondere aus Figur 6 ersichtlich, ist die jeweilige obere Abstützfläche A1 in Fahrzeuglängsrichtung nach hinten in einem Abstand zum beziehungsweise vor dem Querträger 32 angeordnet. Weiterhin ist auch die jeweilige untere Abstützfläche A2 in Fahrzeuglängsrichtung von dem Trägerelement 22 beabstandet. Die Beabstandung der beiden Abstützflächen A1 und A2 vom Querträger 32 beziehungsweise dem Trägerelement 22 weist den Vorteil auf, dass Lage- und Bauteiltoleranzen ohne weiteres ausgeglichen werden können. Erst im Crashfall bei einer entsprechenden Verformung des Fahrzeugvorbaus gelangen die Abstützflächen A1 und A2 in Anlage mit dem Querträger 32 beziehungsweise dem Trägerelement 22, so dass erst dann die Lastpfade aufgebaut und die Crashkräfte hierüber in den Querträger beziehungsweise dem Trägerelement 22 eingeleitet werden. Selbstverständlich kann bei einem alternativen Ausführungsbeispiel des Fahrzeugs vorgesehen sein, dass bereits beim Anbringen des Integralträgers am Fahrzeug die obere Abstützfläche A1 in Anlage mit dem Querträger 32 gebracht wird.

Vorzugsweise ist es vorgesehen, dass der Querträger 32 endseitig, das heißt über seine jeweiligen Enden an jeweilige, in Fahrzeugquerrichtung voneinander beabstandete Seitenschweller der Karosserie 12 angebunden ist, wobei vorzugsweise auch das Trägerelement 22 an die Seitenschweller angebunden ist. Ferner ist es denkbar, dass das Trägerelement 22 am Querträger 32 befestigt ist.

Die bogenförmige Struktur 26 weist Schenkel 36 auf, welche jeweils an sich bogenförmig verlaufen, zusammengesetzt sind und dadurch die Form des griechischen Großbuchstabens Omega zusammen bilden. Dabei weist der Integralträger 10 einen weiteren, hinteren Integralträger-Querträger 38 auf, über welchen die Schenkel 36 der bogenförmigen Struktur 26, das heißt der Omega-Form, miteinander verbunden sind. Insbesondere ist der Integralträger-Querträger 38 eine Querstrebe, welche optional vorgesehen ist und insbesondere dazu verwendet wird, um ein vorteilhaftes, auch als NVH-Verhalten (NVH - Noise Vibration Harshness) bezeichnetes Geräuschverhalten zu realisieren. Ferner ist es denkbar, dass das Trägerelement 22 an zusätzlich zu den Seitenschwellern und zusätzlich zu dem Querträger 32 vorgesehenen Karosserieelementen der Karosserie 12 befestigt ist. Die nur optional vorgesehene Quertrebe dient beispielsweise dazu, die Schenkel 36 insbesondere im Bereich ihrer Enden und somit die beispielsweise als Lager ausgebildeten oder als Lager verwendeten Befestigungselemente 34 abzustützen.

Fig. 6 zeigt nochmals besonders gut die Abstützung oder Abstützbarkeit des Integralträgers 10 über die Abstützflächen A1 und A2 an dem Querträger 32 und dem Trägerelement 22 nach hinten.

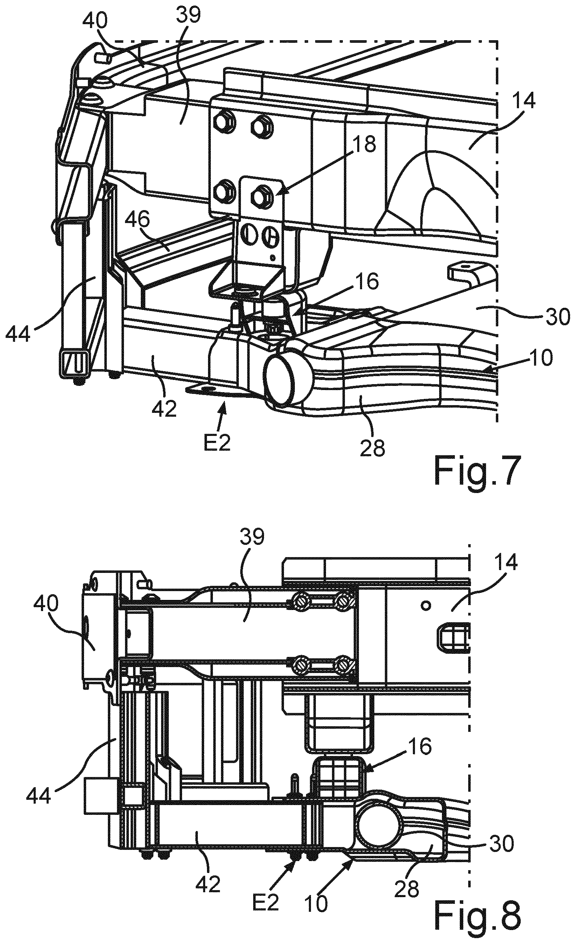

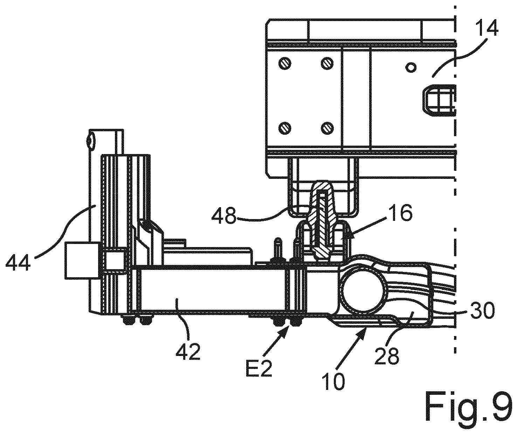

Aus Fig. 7 ist am Beispiel des oberen Längsträgers 14 besonders gut erkennbar, dass der jeweilige Hauptlängsträger mit einem jeweiligen, auch als Crashbox bezeichneten Energieabsorptionselement 39 verbunden ist. Das Energieabsorptionselement 39 ist insbesondere bei einem Frontalaufprall unter Energieverzehrung verformbar. Die Energieabsorptionselemente 39 sind über einen sich zumindest im Wesentlichen in Fahrzeugquerrichtung erstreckenden, vorderen Biegequerträger 40, dem sogenannten Stoßfängerbiegequerträger, miteinander verbunden, so dass die Hauptlängsträger endseitig über die Energieabsorptionselemente 38 mittels des Biegequerträgers 40 miteinander verbunden sind. Außerdem ist besonders gut aus Fig. 7, 8 und 9 erkennbar, dass der jeweilige Stützträger 28 an seinem jeweiligen, der bogenförmigen Struktur 26 abgewandten, vorderen Ende mit einem jeweiligen, weiteren Energieabsorptionselement 42 verbunden ist, welches in Fahrzeughochrichtung unter dem jeweiligen Energieabsorptionselement 39 angeordnet ist. Somit sind die Energieabsorptionselemente 42 an einem der bogenförmigen Struktur 26 abgewandten, vorderen Ende E2 des Integralträgers 10 angebracht, dessen vorderes Ende E2 durch die Stützträger 28 beziehungsweise durch deren Enden gebildet ist. Das jeweilige Energieabsorptionselement 42 wiederum ist an eine jeweilige Vertikalstrebe 44 angebunden, welche sich zumindest im Wesentlichen in Fahrzeughochrichtung erstreckt. Die einenends mit dem jeweiligen Energieabsorptionselement 42 verbundene Vertikalstrebe 44 ist anderenends mit dem über dem jeweiligen Energieabsorptionselement 42 angeordneten Biegequerträger 40 verbunden. Außerdem sind die in Fahrzeugquerrichtung voneinander beabstandeten und somit auf beiden Seiten des Personenkraftwagens vorgesehenen Vertikalstreben 44 mittels eines Querelements 46 miteinander verbunden. Das Querelement 46 ist dabei in Fahrzeughochrichtung unter dem Biegequerträger 40 angeordnet und in Fahrzeuglängsrichtung vor dem Integralträger-Querträger 30 angeordnet.

Besonders gut aus Fig. 7 bis 9 erkennbar ist das in Fahrzeuglängsrichtung vordere der Befestigungselemente 16 des jeweiligen Stützträgers 28. Dabei ist der jeweilige Stützträger 28 über das jeweilige Befestigungselement 16 mittels eines zusätzlichen, separaten Schraubelements 48 mit dem Längsträger 14 verbunden, das heißt gegen den Längsträger 14 geschraubt und dadurch an dem Längsträger 14 befestigt.

Aus Fig. 1 ist erkennbar, dass der jeweilige Schenkel 36 der bogenförmigen Struktur 26 eine jeweilige Aufnahme 50 für einen Drehstab einer Lenkung des Personenkraftwagens aufweist. Dies bedeutet insbesondere, dass der Drehstab zumindest teilweise in der Aufnahme 50 angeordnet ist. Aus Fig. 5 ist erkennbar, dass der jeweilige Schenkel 36 eine beispielsweise als Durchgangsöffnung ausgebildete Öffnung 52 aufweist, insbesondere auf Höhe des optional vorgesehenen Integralträger-Querträgers 38. In der Öffnung 52 ist eine Hülse anordenbar oder angeordnet. Durch die Öffnung 52 und insbesondere durch die Hülse kann eine Schraube hindurchgesteckt werden, mittels welcher der Integralträger 10 gegen einen Stirnwand-Anschlussträger geschraubt und dadurch an dem Stirnwand-Anschlussträger befestigt werden kann. Außerdem ist aus Fig. 2 erkennbar, dass der Integralträger 10 insbesondere je Schenkel 36 jeweilige Aufnahmebereiche 54 und 56 aufweist. Über den Aufnahmebereich 54 kann beispielsweise eine Querstrebe an dem Integralträger 10 angebunden werden, und über den Aufnahmebereich 56 kann beispielsweise eine Druckstrebe an dem Integralträger 10 angebunden werden.

Die bogenförmige Struktur 26 ist ein Omega-förmiges Hauptprofil des Integralträgers 10, welcher die Stützträger 28 als Anschlussträger und die Integralträger-Querträger 30 und 38 als durchgängige Querstrukturen umfasst. Dabei ist jedoch der Integralträger-Querträger 38 nur optional vorgesehen und kann entfallen. Da der Integralträger-Querträger 30 in Fahrzeuglängsrichtung von der bogenförmigen Struktur 26 und insbesondere von deren Scheitel 58 beabstandet ist, ist der Integralträger-Querträger 30 von dem Scheitel 58 der auch als Omega-Profil bezeichneten, bogenförmigen Struktur 26 entkoppelt. Der Integralträger-Querträger 30 ist dabei über die Stützträger 28 an dem Omega-Profil befestigt. Beispielsweise bei einem Frontalaufprall mit geringer Seitenüberdeckung gegen ein starres Hindernis kann durch die Schubsteifigkeit des Integralträgers 10 in der x-y-Ebene eine Hebelwirkung zum Fahrzeugschwerpunkt erzielt werden. Diese Hebelwirkung verringert auf effiziente Weise die Überdeckung zu dem starren Hindernis und ermöglicht somit ein Abgleiten der hinteren Fahrzeugstruktur an dem auch als Barriere bezeichneten Hindernis. Der Integralträger 10 ermöglicht dabei eine besonders vorteilhafte Energieaufnahme. Das Omega-Profil (bogenförmige Struktur 26) ist durch mehrere Einzelprofile 60a-h gebildet, welche beispielsweise zusammengesetzt sind. Die Einzelprofile 60a-h sind zueinander ausrichtbar und liegen beispielsweise alle ungefähr auf gleichem Höhenniveau. Die Grundform des Omega-Profils kann eine rechteckige Form sein und in einem vorderen Bereich den Scheitel 58 bilden. Die Stufen S mit den Abstützflächen A1 und A2 ermöglichen dabei eine formschlüssige Abstützung in Fahrzeuglängsrichtung nach hinten an benachbarten Bauteilen in Form des Querträgers 32 und des Trägerelements 22 des Energiespeichers 20. Der hintere Integralträger-Querträger 38 selbst ist beispielsweise aus mehreren Einzelteilen 62a-b zusammengesetzt. Der hintere Integralträger-Querträger 38 wird beispielsweise von dem Omega-Profil zumindest teilweise, insbesondere vollständig, umschlossen. An den an sich offenen Enden des Omega-Profils, insbesondere der Schenkel 36, können Befestigungsmöglichkeiten zu benachbarten Bauteilen integriert sein. Die Aufnahmebereiche 54 und 56 dienen beispielsweise dazu, um Lager aufzunehmen, über die Radlenker und/oder Streben insbesondere gelenkig an dem Integralträger 10 angebunden werden können. Insbesondere dienen die Lager zur Lagerung von Komponenten der zuvor genannten Achse, insbesondere Vorderachse. Das Omega-Profil bietet zudem die Möglichkeit, kurz vor dem hinteren Integralträger-Querträger 38 den Drehstab auf dem Integralträger 10 zu lagern. Hierzu kann beispielsweise in der jeweiligen Aufnahme 50 ein Lager zur Lagerung des Drehstabs angeordnet oder anordenbar sein.

Die beispielsweise separat von dem Omega-Profil ausgebildeten und auch als Anschlussträger bezeichneten Stützträger 28 sind fest, insbesondere durch Schweißen, mit dem Omega-Profil verbunden. Die Anschlussträger verlaufen in Fahrzeuglängsrichtung nach vorne und in Fahrzeugquerrichtung nach außen und ragen weit über die Breite des Omega-Profils hinaus. Der jeweilige Anschlussträger ist beispielsweise aus mehreren Einzelteilen 64a-d zusammengesetzt. An einem jeweiligen Ansatz des jeweiligen Anschlussträgers insbesondere im Bereich des Omega-Profils ist eine jeweilige Abstützung 66a, b, insbesondere durch Schweißen, fest mit dem jeweiligen Anschlussträger verbunden. Diese Verbindung wird vorzugsweise an drei Seiten sichergestellt und kann zumindest im Wesentlichen U-förmig sein. Die Abstützungen 66a, b werden beispielsweise über weitere Konsolen 68a-d mit dem jeweiligen Anschlussträger, insbesondere durch Schweißen, fest verbunden. Durch die Abstützungen 66a, b wird auf jeder Seite die Aufnahme von Lagern in dem jeweiligen Aufnahmebereich 54 gewährleistet. Auch diese Lager dienen zur Lagerung von Komponenten für die Achse. Zusätzlich befinden sich die beiden Enden der Anschlussträger auf einem anderen Höhenniveau als das Omega-Profil, so dass die Enden der Stützträger 28 und somit das Ende E2 des Integralträgers 10 in Fahrzeughochrichtung weiter oben angeordnet ist als das Omega-Profil. Dies bedeutet, dass durch die Anschlussträger (Stützträger 28) ein Höhenversatz im Vergleich zu dem Omega-Profil ermöglicht wird. Dadurch kann Unfall- beziehungsweise Aufprallenergie über zwei horizontale Ebenen abgeleitet werden. Im vorderen, oberen Bereich der Stützträger 28 werden durch eine durchgängige Struktur die Stützträger 28 miteinander verbunden. Vorliegend ist die durchgängige Struktur der vordere Integralträger-Querträger 30, welcher beispielsweise als ein Rohr ausgebildet ist. Der Integralträger-Querträger 30 ist fest, insbesondere durch Schweißen, mit den Stützträgern 28 verbunden. Aufnahmebereiche an den Anschlussträgern für die durchgängige Struktur sind vorzugsweise möglichst weit außen angeordnet und ermöglichen eine großflächige Anbindung der durchgängigen Struktur an den jeweiligen Stützträger 28, wobei in Fig. 2 mit 70a, b jeweilige Bereiche bezeichnet sind, in denen der Integralträger-Querträger 30 fest und vorzugsweise großflächig an die Stützträger 28 angebunden ist. Der beispielsweise als Querrohr ausgebildete Integralträger-Querträger 30 an sich ist nicht direkt mit dem Omega-Profil verbunden und liegt nicht auf dem gleichen Höhenniveau wie das Omega-Profil. Im Folgenden wird die Wirkungsweise des Integralträgers 10 beschrieben:

Bei einem Frontalaufprall wird ein Teil der Unfallenergie von den beiden Anschlussträgern absorbiert, insbesondere dadurch, dass die Anschlussträger verformt werden. Durch den beschriebenen Höhenversatz kann über eine große Distanz in Fahrzeuglängsrichtung Deformationsenergie eingebracht werden. Die zweite Verformungsmöglichkeit liegt zwischen den mittleren Abstützungen 66a, b und den hinteren, beispielsweise als Konsolen ausgebildeten Einzelprofilen 60e, f der auch als Omega-Rahmen bezeichneten Omega-Struktur. In diesem Bereich wird weitere Energie vom Material aufgenommen, bevor die starre Struktur mit den Befestigungspunkten zu den benachbarten Bauteilen beginnt. Die jeweiligen Abstützflächen A1 und A2 an den beiden hinteren, insbesondere offenen, Enden des Omega-Profils beziehungsweise der Schenkel 36 sorgen für ein vorteilhaftes Unfallverhalten.

Bei einem Frontalaufprall mit geringer Seitenüberdeckung hat der Integralträger 10 einerseits die Aufgabe, Energie zu absorbieren, andererseits mittels einer ausgeprägten Schubsteifigkeit und damit einem Hebelarm bezüglich des Fahrzeugschwerpunkts die Überdeckung zum starren Hindernis zu verringern. Diese konträren Anforderungen können wie folgt gelöst werden: Ein Hindernis mit geringer Seitenüberdeckung zum Personenkraftwagen trifft auf eine Schräge an den Enden der vorderen, durchgehenden Struktur (Integralträger-Querträger 30) auf. Diese sorgt sowohl für eine Einleitung von hohen seitlichen Kräften in die vordere durchgängige Struktur, um die Überdeckung des Personenkraftwagens zumindest zu reduzieren, als auch für die Einleitung von Kräften in Längsrichtung, welche zur Energieabsorption in den Anschlussträgern führen. Sehr vorteilhaft hierbei ist, dass die Einleitung der seitlichen Kräfte über einen langen Zeitraum aufrechterhalten werden kann, während die vordere schräge Struktur während der Deformation der Anschlussträger nach hinten geführt wird. Die durchgängige Struktur wie auch die bogenförmige Struktur 26 bleiben hierbei weitestgehend unverformt, um ein hohes seitliches Kraftniveau und damit eine Hebelwirkung bezüglich des Fahrzeugschwerpunkts aufrecht halten zu können.

Bei einem Pfahlcrash trifft beispielsweise eine außenumfangsseitig runde Barriere zumindest im Wesentlichen mittig auf den Integralträger-Querträger 30 auf. Bei einem solchen Pfahlcrash wird die vordere durchgängige Struktur in einem ersten Schritt auf Biegung belastet und nimmt Energie auf. Durch die vertikale Anbindung des Integralträgers 10 an die Hauptlängsträger wird dadurch zusätzlich die Rohbaustruktur aktiviert und durch ein Biegeelement die Hauptlängsträger zusätzlich als energieaufnehmende Struktur genutzt. Die Barriere wandert im Verlauf des Pfahlcrashs weiter nach hinten. Infolgedessen werden die Anschlussträger nach hinten gezogen, wodurch sich die vordere Struktur zumindest V-förmig nach hinten ausbildet. Dadurch, dass die durchgängige, vordere Struktur (Integralträger-Querträger 30) nicht am Scheitel 58 des Omega-Profils befestigt ist und von dem Scheitel 58 beabstandet ist und sich somit die vordere Struktur nach hinten frei bewegen kann, kann Energie schon aufgenommen werden, bevor die Barriere beziehungsweise die vordere, durchgängige Struktur auf das Omega-Profil auftrifft. Treffen schließlich der Pfahl und die vordere, durchgängige Struktur auf das Omega-Profil auf, wird die Last auf das gesamte Omega-Profil verteilt. Die verbleibende Energie wird zuletzt durch Deformation des Omega-Profils beziehungsweise im Omega-Profil aufgenommen.

## Patentansprüche

1. Personenkraftwagen mit
- einem Integralträger (10),
- einer Karosserie (12), welche in Fahrzeugquerrichtung voneinander beabstandete Längsträger (14) aufweist, wobei der Integralträger (10) an den Längsträgern (14) der Karosserie (12) befestigt ist,
- und einer Befestigungsanordnung des Integralträgers (10) an der Karosserie (12), wobei ein in Fahrzeuglängsrichtung hinter dem Integralträger (10) angeordneter elektrischer Energiespeicher (20), welcher unterhalb eines Bodens (24) der Karosserie (12) angeordnet ist, an der Karosserie (12) befestigt ist,
**dadurch gekennzeichnet, dass**
der Integralträger (10) an seinem dem Energiespeicher (20) zugewandten Ende (E) wenigstens eine Stufe (S) aufweist, durch welche wenigstens eine obere Abstützfläche (A1) und eine untere Abstützfläche (A2) gebildet sind, wobei die obere Abstützfläche (A1) in Fahrzeuglängsrichtung in Gegenüberlage zu einem unter dem Boden (24) angeordneten Querträger (32) der Karosserie (12) und die untere Abstützfläche (A2) in Fahrzeuglängsrichtung in Gegenüberlage zu einem unter dem Boden (24) angeordneten Trägerelement (22) des Energiespeichers (20) angeordnet sind.

2. Personenkraftwagen nach Anspruch 1,
**dadurch gekennzeichnet, dass** die wenigstens eine untere Abstützfläche (A2) gegenüber der oberen Abstützfläche (A1) in Fahrzeuglängsrichtung nach hinten versetzt angeordnet ist.

3. Personenkraftwagen nach Anspruch 1 oder 2,
**dadurch gekennzeichnet, dass**
der Integralträger (10) im Bereich der Abstützflächen (A1, A2), insbesondere in Fahrzeuglängsrichtung zwischen den Abstützflächen (A1, A2), in Fahrzeughochrichtung nach oben an dem Querträger (32) befestigt, insbesondere an den Querträger (32) angeschraubt, ist

4. Personenkraftwagen nach einem der vorhergehenden Ansprüche,
**dadurch gekennzeichnet, dass**
die obere Abstützfläche (A1) in Fahrzeuglängsrichtung nach hinten direkt am Querträger (32) anliegt.

5. Personenkraftwagen nach einem der vorhergehenden Ansprüche 1 bis 3, **dadurch gekennzeichnet, dass**
die untere Abstützfläche (A2) in Fahrzeuglängsrichtung von dem Trägerelement (22) beabstandet ist und/oder dass die obere Abstützfläche (A1) von dem Querträger (32) beabstandet ist.

6. Personenkraftwagen nach einem der vorhergehenden Ansprüche,
**dadurch gekennzeichnet, dass**
der Querträger (32) endseitig an jeweilige, in Fahrzeugquerrichtung voneinander beabstandete Seitenschweller der Karosserie (12) angebunden ist.

7. Personenkraftwagen nach Anspruch 6,
**dadurch gekennzeichnet, dass**
das Trägerelement (22) an die Seitenschweller angebunden ist.

8. Personenkraftwagen nach einem der vorhergehenden Ansprüche,
**dadurch gekennzeichnet, dass**
das Trägerelement (22) am Querträger (32) befestigt ist.

9. Personenkraftwagen nach einem der vorhergehenden Ansprüche,
**dadurch gekennzeichnet, dass**
der Integralträger (10) eine bogenförmige Struktur (26) mit zwei vorderen, sich in Fahrzeuglängsrichtung nach vorne von der bogenförmigen Struktur (26) und voneinander weg erstreckende Stützträger (28) aufweist sowie gegebenenfalls einen weiteren, hinteren Integralträger-Querträger (38), über welchen jeweilige Schenkel (36) der bogenförmigen Struktur (26) miteinander verbunden sind.

## Claims

1. Passenger car comprising
- an integral subframe (10),
- a body (12) which has longitudinal members (14) spaced apart from one another in the transverse direction of the vehicle, the integral subframe (10) being fastened to the longitudinal members (14) of the body (12),
- and a fastening arrangement for fastening the integral subframe (10) to the body (12), an electrical energy storage device (20), which is arranged behind the integral subframe (10) in the longitudinal direction of the vehicle and which is arranged below a base (24) of the body (12), being fastened to the body (12),
**characterized in that**
the integral subframe (10) has at least one step (S) at its end (E) facing the energy storage device (20), by means of which step at least one upper support surface (A1) and one lower support surface (A2) are formed, the upper support surface (A1) being arranged in the longitudinal direction of the vehicle opposite a cross member (32) of the body (12) arranged under the base (24) and the lower support surface (A2) being arranged in the longitudinal direction of the vehicle opposite a support element (22) of the energy storage device (20) arranged under the base (24).

2. Passenger car according to claim 1,
**characterized in that** the at least one lower support surface (A2) is arranged offset to the rear relative to the upper support surface (A1) in the longitudinal direction of the vehicle.

3. Passenger car according to either claim 1 or 2,
**characterized in that**
the integral subframe (10) is fastened to the cross member (32), in particular screwed to the cross member (32), in the region of the support surfaces (A1, A2), in particular in the longitudinal direction of the vehicle between the support surfaces (A1, A2), at the top in the vertical direction of the vehicle.

4. Passenger car according to any of the preceding claims,
**characterized in that**
the upper support surface (A1) rests directly on the cross member (32) towards the rear in the longitudinal direction of the vehicle.

5. Passenger car according to any of the preceding claims 1 to 3,
**characterized in that**
the lower support surface (A2) is spaced apart from the support element (22) in the vehicle longitudinal direction**and/or in that** the upper support surface (A1) is spaced apart from the cross member (32).

6. Passenger car according to any of the preceding claims,
**characterized in that**
the cross member (32) is connected at the ends to respective side sills of the body (12) spaced apart from one another in the transverse direction of the vehicle.

7. Passenger car according to claim 6,
**characterized in that**
the support element (22) is connected to the side sills.

8. Passenger car according to any of the preceding claims,
**characterized in that**
the support element (22) is fastened to the cross member (32).

9. Passenger car according to any of the preceding claims,
**characterized in that**
the integral subframe (10) has an arched structure (26) comprising two front support members (28) extending forwards from the arched structure (26) in the longitudinal direction of the vehicle and away from each other and optionally a further, rear integral subframe cross member (38), via which respective legs (36) of the arched structure (26) are connected to one another.

## Revendications

1. Véhicule particulier comportant
- un support intégral (10),
- une carrosserie (12) qui présente des longerons (14) espacés les uns des autres dans la direction transversale de véhicule, dans lequel le support intégral (10) est fixé aux longerons (14) de la carrosserie (12),
- et un agencement de fixation du support intégral (10) sur la carrosserie (12), dans lequel un accumulateur d'énergie (20) électrique disposé derrière le support intégral (10) dans la direction longitudinale de véhicule, lequel accumulateur d'énergie est disposé en dessous d'un fond (24) de la carrosserie (12), est fixé à la carrosserie (12),
**caractérisé en ce que**
le support intégral (10) présente, au niveau de son extrémité (E) tournée vers l'accumulateur d'énergie (20), au moins un épaulement (S) au moyen duquel sont formées au moins une surface d'appui supérieure (A1) et une surface d'appui inférieure (A2), dans lequel la surface d'appui supérieure (A1) est disposée, dans la direction longitudinale de véhicule, en vis-à-vis d'une traverse (32) de la carrosserie (12) disposée en dessous du fond (24) et la surface d'appui inférieure (A2) est disposée, dans la direction longitudinale de véhicule, en vis-à-vis d'un élément de support (22) de l'accumulateur d'énergie (20) disposé en dessous du fond (24).

2. Véhicule particulier selon la revendication 1,
**caractérisé en ce que** l'au moins une surface d'appui inférieure (A2) est disposée de manière à être décalée vers l'arrière par rapport à la surface d'appui supérieure (A1) dans la direction longitudinale de véhicule.

3. Véhicule particulier selon la revendication 1 ou 2,
**caractérisé en ce que**
le support intégral (10) est fixé à la traverse (32), en particulier vissé à la traverse (32), vers le haut dans la direction verticale de véhicule dans la zone des surfaces d'appui (A1, A2), en particulier entre les surfaces d'appui (A1, A2) dans la direction longitudinale de véhicule.

4. Véhicule particulier selon l'une des revendications précédentes,
**caractérisé en ce que**
la surface d'appui supérieure (A1) est en contact direct avec la traverse (32) vers l'arrière dans la direction longitudinale de véhicule.

5. Véhicule particulier selon l'une des revendications précédentes 1 à 3,
**caractérisé en ce que**
la surface d'appui inférieure (A2) est espacée de l'élément de support (22) dans la direction longitudinale de véhicule **et/ou en ce que** la surface d'appui supérieure (A1) est espacée de la traverse (32).

6. Véhicule particulier selon l'une des revendications précédentes,
**caractérisé en ce que**
la traverse (32) est reliée à ses extrémités à des bas de caisse respectifs de la carrosserie (12), espacés les uns des autres dans la direction transversale de véhicule.

7. Véhicule particulier selon la revendication 6,
**caractérisé en ce que**
l'élément de support (22) est relié aux bas de caisse.

8. Véhicule particulier selon l'une des revendications précédentes,
**caractérisé en ce que**
l'élément de support (22) est fixé à la traverse (32).

9. Véhicule particulier selon l'une des revendications précédentes,
**caractérisé en ce que**
le support intégral (10) présente une structure en forme d'arc (26) comportant deux supports d'appui (28) avant, s'étendant dans la direction longitudinale de véhicule vers l'avant à partir de la structure en forme d'arc (26) et en s'éloignant l'un de l'autre, ainsi qu'éventuellement une autre traverse de support intégral (38) arrière, par l'intermédiaire de laquelle des branches (36) respectives de la structure en forme d'arc (26) sont reliées entre elles.
